# EUROPÄISCHE PATENTANMELDUNG

(11) **EP 1 074 288 A1**
(43) Veröffentlichungstag der Anmeldung: **07.02.2001**
(21) Anmeldenummer: 99115550.8
(22) Anmeldetag: 06.08.1999
(51) Int. Cl.: B01D 53/00, B01D 50/00

(54) **Verfahren und Anlage zur Beseitigung von in einem Gasstrom gebundenen organischen Flüssigkeiten aus dem Gasstrom**

(71) Anmelder: Munters Euroform GmbH, 52072 Aachen (DE)
(72) Erfinder: Gröver, Christian, 52134 Herzogenrath (DE)
(74) Vertreter: Patentanwälte Hauck, Graalfs, Wehnert, Döring, Siemons

(57) **Zusammenfassung**

Es werden ein Verfahren und eine Anlage zur Beseitigung von in einem Gasstrom gebundenen organischen Flüssigkeiten aus dem Gasstrom beschrieben. Bei dem Verfahren wird die Temperatur des Gasstromes insbesondere stufenweise abgesenkt, um ein Auskondensieren der gebundenen organischen Flüssigkeiten zu erreichen. Das auskondensierte Gemisch aus den gebundenen organischen Flüssigkeiten und Wasser wird aus dem Gasstrom abgeschieden und einer Phasentrenneinrichtung zugeführt. Nach erfolgter Phasentrennung liegt im wesentlichen unveränderte organische Flüssigkeit vor, die wiederverwendet werden kann. Die zugehörige Anlage zeichnet sich durch einen Wärmetauscher, mit dem die Temperaturabsenkung des Gasstromes erfolgt, sowie einen nachgeordneten Diffusionsfilter aus.

## Beschreibung

Die vorliegende Erfindung betrifft ein Verfahren zur Beseitigung von in einem Gasstrom gebundenen organischen Flüssigkeiten aus dem Gasstrom sowie eine entsprechende Anlage.

Es ist bekannt, daß beispielsweise bei der Herstellung von Kunststoffprodukten, die in Öfen ausgehärtet werden, Gasströme an die Umgebung abgegeben werden, die die Umwelt verunreinigende Substanzen enthalten, wie beispielsweise flüchtige Lösungsmittel, Weichmacher, Additive etc. Diese Substanzen müssen entfernt werden, bevor der Gasstrom an die Atmosphäre abgegeben wird.

So sind beispielsweise die Hersteller von PVC-Böden, Tapeten, Farben und Lacken gezwungen, entsprechende Maßnahmen zu ergreifen, um den Ausstoß von die Umwelt verunreinigenden Substanzen zu senken. Um dem geforderten Restgehalt gerecht zu werden, bieten sich dem Hersteller solcher Produkte die Möglichkeiten einer thermischen Nachverbrennung, bei der die bei dem Prozeß freiwerdenden Lösungsmittel/ Weichmacher über Aktivkohlefilter absorbiert und die Restanteile über eine Nachverbrennung vernichtet werden, und eines Biofilterverfahrens, bei dem die verunreinigenden Substanzen biologisch abgebaut werden. Beide Verfahren sind jedoch mit hohen Anschaffungs- und Unterhalts- sowie Wartungskosten verbunden. Darüber hinaus ist das Biofilterverfahren üblicherweise nicht in der Lage, Eintrittsbeladungen über 100 mg/Nm³ aufzunehmen, und es ist eine große Bebauungsfläche zur Durchführung dieses Verfahrens erforderlich.

Schließlich haftet beiden Verfahren der Nachteil an, daß die dem Gasstrom entzogenen Substanzen vernichtet und nicht der Wiederverwendung zugeführt werden.

Aus der EP 0 418 058 B1 ist eine Waschanlage für die Beseitigung von Flüssigkeitströpfchen und gasförmigen Verunreinigungen aus einem Gasstrom bekannt, die eine Waschvorrichtung aufweist, welche eine Zerstäubungsspritzanlage, eine Absorptionsfiltereinrichtung und eine Diffusionsfiltereinrichtung besitzt. Der die Verunreinigungen enthaltende Gasstrom wird hierbei mit zerstäubter Waschflüssigkeit beaufschlagt. Die im Gasstrom enthaltenden Verunreinigungen werden in der Waschflüssigkeit absorbiert, die über die Absorptionsfiltereinrichtung und die Diffusionsfiltereinrichtung vom Gasstrom abgetrennt wird. Diese Anlage arbeitet somit als Gaswäscher. Es fällt hierbei eine relativ große Menge an verunreinigter Waschflüssigkeit an, die weiterverarbeitet werden muß, was einen relativ hohen Aufwand mit sich bringt.

Der Erfindung liegt die Aufgabe zugrunde, ein Verfahren und eine Anlage zur Beseitigung von in einem Gasstrom gebundenen organischen Flüssigkeiten, wie Lösungsmitteln, Weichmachern, Additiven etc., aus dem Gasstrom zu schaffen, das bzw. die besonders kostengünstig durchgeführt bzw. betrieben werden kann.

Diese Aufgabe wird durch ein Verfahren der angegebenen Art gelöst, das die folgenden Schritte umfaßt:
a. Absenken der Temperatur des Gasstromes zum Auskondensieren der gebundenen organischen Flüssigkeiten;
b. Abscheiden der auskondensierten gebundenen organischen Flüssigkeiten und von mitauskondensiertem Wasser aus dem Gasstrom;
c. Führen des Gasstromes durch einen Diffusionsfilter und Abtrennen des restlichen gebundenen organischen Flüssigkeitsanteils und von mitauskondensiertem Wasser; und
d. Separieren des aus dem Gasstrom abgeschiedenen Gemisches aus auskondensierten gebundenen organischen Flüssigkeiten und auskondensiertem Wasser.

Bei dem erfindungsgemäßen Verfahren wird die Temperatur des Gasstromes abgesenkt, um ein Auskondensieren der gebundenen organischen Flüssigkeiten zu bewirken. Dabei erfolgt die Temperaturabsenkung bis unter den Taupunkt von Wasserdampf, so daß gleichzeitig mit den gebundenen organischen Flüssigkeiten Wasser auskondensiert wird. Das auskondensierte Gemisch aus den gebundenen organischen Flüssigkeiten und von Wasser wird aus dem Gasstrom abgeschieden. Der gereinigte Gasstrom wird durch einen Diffusionsfilter geführt, um hier den restlichen gebundenen organischen Flüssigkeitsanteil und mitauskondensiertes Wasser abzutrennen. Das aus der Kühlstufe und der Diffusionsstufe gewonnene Flüssigkeitsgemisch wird separiert, so daß als Endprodukte Wasser und die im Gasstrom gebundenen organischen Flüssigkeiten anfallen.

Erfindungsgemäß wird somit mit einer Kühlstufe und einer Diffusionsstufe gearbeitet, um die verunreinigenden Substanzen abzutrennen. In der Diffusionsstufe wird der Restanteil der gebundenen organischen Flüssigkeiten abgetrennt, und zwar durch Aufprall von Tröpfchen mit einem Durchmesser von weniger als etwa 1 bis 2 µm und durch Diffusion von feineren Tröpfchen.

Es versteht sich, daß in der Kühlstufe die Temperatur des Gasstromes soweit abgesenkt wird, daß der Taupunkt der zu entfernenden im Gasstrom gebundenen organischen Flüssigkeiten unterschritten wird, um einen möglichst großen Anteil der gebundenen organischen Flüssigkeiten abscheiden zu können und den nachfolgenden Diffusionsfilter möglichst wenig zu belasten. Nach der Kühlstufe wird daher immer ein Gemisch aus den auskondensierten gebundenen organischen Flüssigkeiten und von mit auskondensiertem Wasser aus dem Gasstrom abgeschieden, wobei dieses Gemisch entsprechend separiert wird, um die auskondensierten gebundenen organischen Flüssigkeiten rückzugewinnen.

In Weiterbildung des erfindungsgemäßen Verfahrens wird die Temperatur des Gasstromes stufenweise abgesenkt, wobei nach jeder Stufe die auskondensierten gebundenen organischen Flüssigkeiten aus dem Gasstrom abgeschieden werden. Dabei wird vorzugsweise so vorgegangen, daß die Temperatur des Gasstromes in einer ersten Stufe auf einen Wert über dem Taupunkt von Wasserdampf abgesenkt wird.

Das stufenweise Absenken der Temperatur des Gasstromes hat generell den Vorteil, daß eine besonders gute Anpassung an die jeweiligen Einzelfälle möglich ist und daß auf diese Weise der Energieverbrauch optimiert werden kann. Bei der vorstehend angegebenen bevorzugten Variante kann in einer ersten Stufe "trocken" gearbeitet werden, d.h. es wird in dieser Stufe kein Wasser mit abgeschieden, so daß hierbei eine nachfolgende Separierung der abgeschiedenen auskondensierten gebundenen organischen Flüssigkeiten von mit auskondensiertem Wasser nicht erforderlich ist. Erst dann, wenn in einer weiteren Stufe der Taupunkt von Wasserdmapf unterschritten wird, wird Wasser mit auskondensiert, so daß ein entsprechendes Gemisch anfällt, das zur Rückgewinnung der gebundenen organischen Flüssigkeiten separiert werden muß.

Es hat sich beispielsweise eine Verfahrensvariante bewährt, bei der die Temperatur des Gasstromes in einer ersten Stufe auf ca. 30-40°C und in einer zweiten Stufe auf < 6°C (Taupunkt von Wasserdampf) abgesenkt wird.

Das erfindungsgemäße Verfahren hat den Vorteil, daß als Endprodukte des Verfahrens die vom Gasstrom abgetrennten organischen Flüssigkeiten und Wasser im separierten Zustand anfallen. Diese Substanzen können der Wiederverwertung oder Wiederaufbereitung zugeführt werden. Damit arbeitet das erfindungsgemäße Verfahren besonders wirtschaftlich.

Die dem Gasstrom entzogenen organischen Verbindungen werden nicht in ihren Eigenschaften beeinflußt und können je nach Anlage und Konfiguration direkt dem vorgeschalteten Prozeß wieder zugeführt, anderweitig verwendet oder aufbereitet werden.

Das Verfahren gestattet eine Anpassung der Abscheideleistung in weiten Bereichen und eignet sich insbesondere für alle derzeit auf dem Markt befindlichen (nicht wasserlöslichen) Lösungsmittel und Weichmacher. Da die Leistungsfähigkeit dse Verfahrens direkt von der Flüchtigkeit des verwendeten Lösungsmittels/Weichmachers abhängt, ist im Rahmen der Tendenz zu weniger flüchtigen Lösungsmitteln/Weichmacher auch für die Zukunft eine hohe Leistungsfähigkeit gewährleistet.

Die entsprechenden Kenngrößen des Verfahrens werden von einer an das Verfahren anpaßten Meß- und Regelrechnik überwacht, die sämtliche für den Prozeß notwendigen Schritte regelt. Über die Einstellung der Verfahrenstemperatur kann der Restgehalt am Austritt des Systems gesteuert werden. Die Temperatur wird durch das verwendete Lösungsmittel/den verwendeten Weichmacher und den geforderten Restgehalt bestimmt. Die einzelnen Schritte der Abkühlung werden in Abhängigkeit vom Einzelfall +spezifiziert.

Die bei dem erfindungsgemäßen Verfahren verwendeten Flüssigkeitskreisläufe sind in sich geschlossen und belasten nicht die Umwelt. Das Verfahren ist nicht exotherm und hat keinen chemischen Einfluß auf die abzuscheidenden Flüssigkeiten.

Das auskondensierte Gemisch aus den gebundenen organischen Flüssigkeiten und Wasser wird zur Separierung vorzugsweise einer Koaleszenzabscheidung unterzogen. Hierdurch können Wasser und die organischen Flüssigkeiten in besonders effektiver Weise voneinander getrennt werden. Dies schließt jedoch nicht aus, daß nicht auch andere Phasentrennvorrichtungen Verwendung finden können.

In Fortbildung des erfindungsgemäßen Verfahrens wird der Gasstrom vor dem Absenken der Gastemperatur durch einen Demister geführt. Als "Demister" wird ein Tropfenabscheider auf Drahtgestrickbasis bezeichnet. Mit diesem vorgeschaltenen Demister können Tröpfchen mit einem Durchmesser von mehr als etwa 5 um aus dem Gasstrom entfernt werden. Der Demister funktioniert somit als Vorabscheider, wobei kein Wasser mitabgeschieden wird, da der Gasstrom den Demister mit einer Temperatur oberhalb des Taupunktes von Wasserdampf passiert. Die vom Demister abgetrennte organische Flüssigkeit kann somit direkt aufgefangen und weiter behandelt bzw. weiter verwendet werden.

Wie erwähnt, werden nach jeder Kühlstufe die auskondensierten gebundenen anorganischen Flüssigkeiten aus dem Gasstrom abgeschieden, wobei der Gasstrom hierzu vorzugsweise eine Tropfenabscheiderstufe passiert. Eine derartige Tropfenabscheiderstufe kann vorzugsweise vom Gasstrom auch zu Beginn des Verfahrens passiert werden, um hierdurch eine weitere Vorabscheidung durchzuführen.

Zu Beginn des Verfahrens kann der Gasstrom ferner eine Agglomerations- und/oder Koeleszenzstufe passieren.

Bei dem zu reinigenden Gasstrom kann es sich um einen Heißgasstrom, einen Kaltgasstrom oder ein Gemisch aus beiden Strömen handeln. Es versteht sich, daß der Gasstrom eine entsprechend hohe Temperatur aufweisen muß, um den Kühlungsschritt des erfindungsgemäßen Verfahrens durchführen zu können. Bei einer speziellen Variante wird als Gasstrom ein Gemisch aus einem Kaltgasstorm und einem Heißgasstrom verwendet, wobei der Heißgasstrom bereits in einer Vorstufe abgekühlt werden kann und in dieser Vorstufe bereits auskondensierte organische Flüssigkeiten anfallen.

Zur Absenkung der Temperatur des Gasstromes finden vorzugsweise Wärmetauscher Verwendung, die von einem Kühlmittel (Wasser) oder einem Kältemittel (Sole o.ä.) gespeist werden. Bei einer Verfahrensvariante kann jedoch die Temperatur des Gasstromes auch durch Besprühen des Gasstromes mit Wasser abgesenkt werden. Mit dieser Verfahrensvariante kann ein zusätzlicher Reinigungseffekt erzielt werden, und diese Variante kann auch als Ersatz- bzw. Notverfahren zur Anwendung gelangen, wenn die Kühlmittel- bzw. Kältemittelkreisläufe der Wärmetauscher ausfallen.

Die vorstehend geschilderte Aufgabe wird ferner durch eine Anlage zur Beseitigung von in einem Gasstrom gebundenen organischen Flüssigkeiten aus dem Gasstrom gelöst. Die Anlage umfaßt einen Wärmetauscher zum Absenken der Gastemperatur und zum Auskondensieren von im Gasstrom gebundenen organischen Flüssigkeiten, einem dem Wärmetauscher nachgeordneten Tropfenabscheider zur Abscheidung der auskondensierten Flüssigkeiten und von mit auskondensiertem Wasser aus dem Gasstrom, einen Diffusionsfilter zum Abbrennen des restlichen gebundenen organischen Flüssigkeitsanteils und von mit auskondensiertem Wasser und eine Phasentrennvorrichtung zur Separierung der auskondensierten gebundenen organischen Flüssigkeiten und des mit auskondensierten Wassers.

Um ein Auskondensieren eines möglichst großen Anteils der gebundenen organischen Flüssigkeiten im Gasstrom vor dem Passieren des Diffusionsfilters zu erreichen, senkt der Wärmetauscher die Temperatur des Gasstromes unter den Taupunkt des im Gasstrom mitgeführten Wasserdampfes. Der Wärmetauscher ist dabei vorzugsweise als Teil einer Kältemaschine ausgebildet und umfaßt einen von Kältemittel bzw. Sole durchflossenen Wärmetauscher unterschiedlicher Bauart (Rohrschlange), der im Gasstrom angeordnet ist.

Vorzugsweise weist die Anlage mehrere Wärmetauscher auf, denen jeweils ein Tropfenabscheider nachgeordnet ist. Dabei ist zweckmäßigerweise neben dem einen Teil einer Kältemaschine bildenen Wärmetauscher ein von einem Kühlmittel durchflossener Wärmetauscher vorgesehen. Dieser wirkt als erste Stufe zur Temperaturabsenkung, während der vom Kältemittel durchflossene Wärmetauscher als zweite Stufe wirkt. Auf diese Weise wird eine stufenweise Reduzierung der Temperatur des Gasstromes durchgeführt, wobei beispielsweise mit einer ersten Stufe eine Temperaturabsenkung auf 30-40°C und mit der zweiten Stufe eine Temperaturabsenkung auf ≤ 6°C durchgeführt wird.

Der Diffusionsfilter ist vorzugsweise als Kerzenfilter ausgebildet. Derartige Filter sind bekannt.

Jedem Wärmetauscher kann ein Tropfenabscheider nachgeordnet sein. Wird bei dem Wärmetauscher der Taupunkt von Wasserdampf nicht unterschritten und erfolgt eine entsprechende Unterschreitung der Taupunkte der abzutrennenden gebundenen organischen Flüssigkeiten, werden mit dem Tropfenabscheider ausschließlich die abzutrennenden organischen Flüssigkeiten abgeschieden, die in einem geeigneten Sammeltank aufgefangen werden können. Wird bei einem Wärmetauscher der Taupunkt vom Wasserdampf unterschritten, scheidet der nachgeordnete Tropfenabscheider ein Gemisch aus Wasser und gasstromgebundenen organischen Flüssigkeiten ab, das vorzugsweise ebenfalls einem Sammelbehälter zugeführt wird. Von dort gelangt das Gemisch in eine Phasentrennvorrichtung, die vorzugsweise ein Koaleszenzabscheider ist. Das abgetrennte Wasser und die abgetrennten organischen Flüssigkeiten werden dann entsprechenden Sammelbehältern zugeführt.

Vorzugsweise wird das abgetrennte Wasser als Kühlmittel für den oder die Wärmetauscher eingesetzt, somit im Kreislauf geführt.

Der oder die Wärmetauscher sind vorzugsweise mit Wassersprüheinrichtungen versehen, die Reinigungsfunktionen besitzen und/oder als Ersatz- oder Notkühleinrichtung eingesetzt werden, wenn die Wärmetauscher ausfallen.

Stromauf des ersten Wärmetauschers ist vorzugsweise ein Demister bzw. ein Koaleszer-Demister angeordnet. Dieser Demister (Drahgestrickabscheider) wirkt als Vorabscheider, mit dem ein Teil der gebundenen organischen Flüssigkeiten bereits aus dem Gasstrom abgeschieden werden kann.

Ferner kann ein Tropfenabscheider am Eingang der Anlage angeordnet werden, der ebenfalls Vorabscheidefunktionen übernimmt.

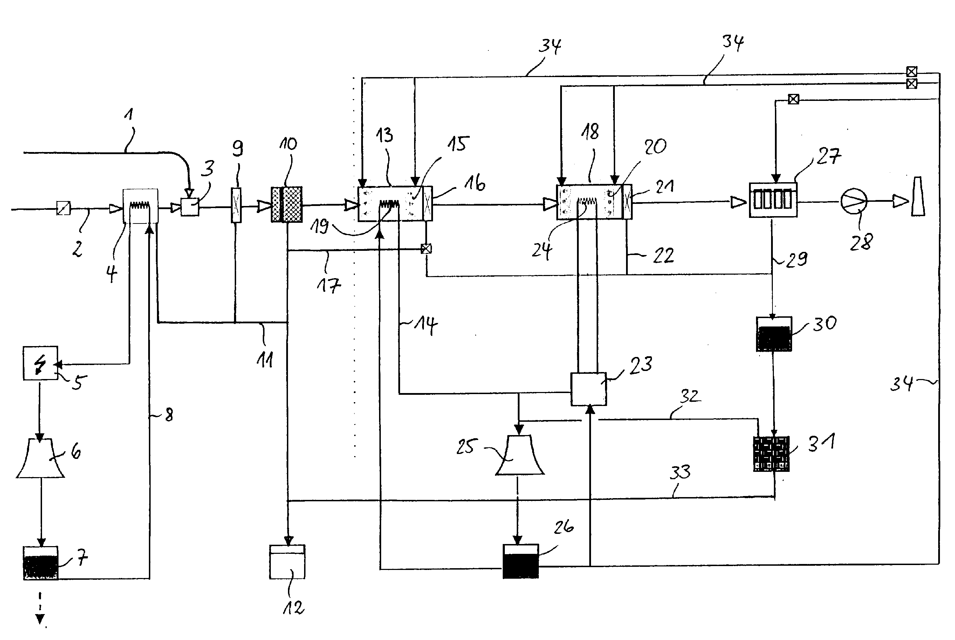

Die Erfindung wird nachfolgend anhand eines Ausführungsbeispiels in Verbindung mit der Zeichnung im einzelnen erläutert. Die einzige Figur zeigt schematisch den Aufbau einer erfindungsgemäß ausgebildeten Anlage.

Bei der in der Figur dargestellten Anlage handelt es sich um eine solche, die zur Beseitigung eines in einem Gasstrom mitgeführten Lösungsmittels dient. Im nachfolgenden Text wird daher ausschließlich von der Beseitigung von Lösungsmittel gesprochen.

Ein Kaltgasstrom wird über eine Leitung 1 der Anlage zugeführt. Der Kaltgasstrom besitzt beispielsweise eine Temperatur von 50°C. Ferner wird ein Heißgasstrom über eine Leitung 2 der Anlage zugeführt. Der Heißgasstrom hat eine Temperatur von beispielsweise 185°C. Er passiert einen Wärmetauscher 4, der eine von Kühlwasser durchströmte Kühlschlange besitzt. Das Kühlwasser befindet sich in einem Wasserkreis 8, der eine Wärmerückgewinnungsanlage 5, einen Kühlturm 6 und einen Wassertank 7 besitzt. Vom Wassertank 7 kann das Kühlwasser einer Kläranlage zugeführt werden.

Der Wärmetauscher 4 dient dazu, die Temperatur des Heißgases abzusenken.

Beide Gasströme treffen an einer Vereinigungsstelle 3 aufeinander und werden als Mischgas weitergeführt. Der Gasstrom hat jetzt einen Feuchtigkeitsgehalt von etwa 50 %. Er passiert einen Tropfenabscheider 9 sowie einen nachgeschalteten Koaleszer/Demister 10.

Vom Wärmetauscher 4, vom Tropfenabscheider 9 und vom Koaleszer/Demister 10 wird auskondensiertes Lösungsmittel über ein Leitungssystem 11 zu einem Lösungsmitteltank 12 geführt und dort gesammelt.

Nach dem Passieren des Koaleszers/Demisters 10 gelangt der Mischgasstrom zu einem ersten Wärmetauscher 13, der eine von Kühlwasser 14 durchflossene Rohrschlange 19 aufweist. Der Gasstrom durchströmt den Wärmetauscher und tritt dabei mit der Kühlschlange 19 in Kontakt. Dabei kondensiert ein weiterer Teil des im Gasstrom enthaltenen Lösungsmittels aus. Die im Gasstrom mitgeführten Lösungsmitteltröpfchen werden vom nachgeschalteten Tropfenabscheider 16 aufgefangen und vom Gasstrom abgeschieden. Vom Tropfenabscheider 16 gelangt das auskondensierte Lösungsmittel über eine Leitung 17 und das bereits erwähnte Leitungssystem 11 zum Lösungsmitteltank 12 und wird dort ebenfalls gesammelt.

Im Wärmetauscher 13 ist ferner eine Sprühvorrichtung 15 zum Sprühen von Kühlwasser auf den Gasstrom vorgesehen. Diese Kühlvorrichtung 15 wird nur dann eingeschaltet, wenn die Kühlschlange 19 des Wärmetauschers ausgefallen ist.

Dem ersten Wärmetauscher 13 ist ein zweiter Wärmetauscher 18 nachgeordnet, der vom Gasstrom passiert wird. Der Wärmetauscher 18 besitzt ebenfalls eine Kühlschlange 24, die von einem Kältemittel durchströmt wird, das Teil einer Kältemaschine 23 bildet. Auch dieser Wärmetauscher 18 besitzt eine Wasserspritzeinrichtung 20 sowie einen nachgeordneten Tropfenabscheider 21.

Bei der hier beschriebenen Anlage wird die Temperatur des Gasstromes im ersten Wärmetauscher 13 von etwa 50°C auf etwa 35,5°C gesenkt. Wie erwähnt, wird im nachgeschaltenen Tropfenabscheider 16 kein Wasser abgeschieden, da der Taupunkt des im Gasstrom enthaltenen Wasserdampfes nicht unterschritten wird.

Im zweiten Wärmetauscher 18 erfolgt eine Absenkung der Temperatur des Gasstromes von 35,5°C auf 6°C. Dadurch, daß hiermit der Taupunkt des Wasserdampfes erreicht bzw. unterschritten wird, wird vom Tropfenabscheider 21 ein Gemisch aus auskondensiertem Lösungsmittel und auskondensiertem Wasser abgeschieden. Dieses Gemisch gelangt in einen Sammelbehälter 30 und von dort in einen Koaleszenzabscheider 31, in dem es in Wasser und Lösungsmittel getrennt wird. Das Lösungsmittel wird über die Leitung 33 in den Lösungsmitteltank 12 geführt, während das abgetrennte Wasser über die Leitung 32 einem Kühlturm 25 und einem Wasserbecken 26 zugeführt wird. Das separierte Wasser gelangt über die Leitung 14 in die Kühlschlange 19 des Wärmetauschers 13 und wird dort zum Kühlen des Gasstromes eingesetzt. Es wird ferner für die Kältemaschine 23 verwendet. Schließlich dient es auch zur Speisung der Wassersprüheinrichtungen 15 und 20 in den beiden Wärmetauschern und Leitungen 34.

Die Anlage weist ferner einen Diffusionsfilter (Kerzenfilter) 27 auf, dem der Gasstrom nach Passieren des Wärmetauschers 18 und Tropfenabscheiders 21 zugeführt wird. Der Kerzenfilter hat im vorliegenden Beispiel 28 Doppelkerzen und bewirkt eine Abtrennung des restlichen Lösungsmittels (Tröpfchendurchmesser < 1 µm) sowie auskondensierten Wassers. Das entsprechende Gemisch gelangt über die Leitung 29 in den Behälter 30 und von dort in den Koaleszenzabscheider 31.

Der nunmehr im wesentlichen von Lösungsmittel gereinigte Gasstrom wird über einen Ventilator 28 aus der Anlage abgeführt.

Die Anlage bewirkt somit eine Abtrennung des Lösungsmittels bzw. Lösungsmittelgemisches aus dem Gasstrom und die Rückgewinnung des Lösungsmittels bzw. Lösungsmittelgemisches in einem nahezu unveränderten Zustand. Es kann daher erneut im jeweiligen Prozeß eingesetzt werden.

## Patentansprüche

1. Verfahren zur Beseitigung von in einem Gasstrom gebundenen organischen Flüssigkeiten aus dem Gasstrom mit den folgenden Schritten:
a. Absenken der Temperatur des Gasstromes zum Auskondensieren der gebundenen organischen Flüssigkeiten;
b. Abscheiden der auskondensierten gebundenen organischen Flüssigkeiten und von mit auskondensiertem Wasser aus dem Gasstrom;
c. Führen des Gasstromes durch einen Diffusionsfilter (27) und Abtrennen des restlichen gebundenen organischen Flüssigkeitsanteils und von mit auskondensiertem Wasser; und
d. Separieren des aus dem Gasstrom abgeschiedenen Gemisches aus auskondensierten gebundenen organischen Flüssigkeiten und auskondensiertem Wasser.

2. Verfahren nach Anspruch 1, dadurch gekennzeichnet, daß die Temperatur des Gasstromes stufenweise abgesenkt wird, wobei nach jeder Stufe die auskondensierten gebundenen organischen Flüssigkeiten aus dem Gasstrom abgeschieden werden.

3. Verfahren nach Anspruch 2, dadurch gekennzeichnet, daß die Temperatur des Gasstromes in einer ersten Stufe auf einen Wert über dem Taupunkt von Wasserdampf abgesenkt wird.

4. Verfahren nach Anspruch 2 oder 3, dadurch gekennzeichnet, daß die Temperatur des Gasstromes in einer ersten Stufe auf 30-40°C abgesenkt wird.

5. Verfahren nach einem der Ansprüche 2 bis 4, dadurch gekennzeichnet, daß die Temperatur des Gasstromes in einer zweiten Stufe auf ≤ 6°C abgesenkt wird.

6. Verfahren nach einem der vorangehenden Ansprüche, dadurch gekennzeichnet, daß die separierten auskondensierten organischen Flüssigkeiten der Wiederverwertung oder Wiederaufbereitung zugeführt werden.

7. Verfahren nach einem der vorangehenden Ansprüche, dadurch gekennzeichnet, daß das auskondensierte Gemisch zur Separierung einer Koaleszenzabscheidung unterzogen wird.

8. Verfahren nach einem der vorangehenden Ansprüche, dadurch gekennzeichnet, daß der Gasstrom vor dem Absenken der Gastemperatur durch einen Demister oder Koaleszer/Demister (10) geführt wird.

9. Verfahren nach einem der vorangehenden Ansprüche, dadurch gekennzeichnet, daß als Gasstrom ein Gemisch aus einem Kaltgasstrom und einem Heißgasstrom verwendet wird.

10. Verfahren nach einem der vorangehenden Ansprüche, dadurch gekennzeichnet, daß die Temperatur des Gasstromes durch Besprühen des Gasstromes mit Wasser abgesenkt wird.

11. Anlage zur Beseitigung von in einem Gasstrom gebundenen organischen Flüssigkeiten aus dem Gasstrom mit einem Wärmetauscher (13, 18) zum Absenken der Gastemperatur zum Auskondensieren von im Gasstrom gebundenen organischen Flüssigkeiten, einem dem Wärmetauscher (13, 18) nachgeordneten Tropfenabscheider (16, 21) zur Abscheidung der auskondensierten Flüssigkeiten und von mit auskondensiertem Wasser aus dem Gasstrom, einem Diffusionsfilter (27) zum Abtrennen des restlichen gebundenen organischen Flüssigkeitsanteils und von mit auskondensiertem Wasser und einer Phasentrennvorichtung zur Separierung der auskondensierten organischen Flüssigkeiten und des mit auskondensierten Wassers.

12. Anlage nach Anspruch 11, dadurch gekennzeichnet, daß sie mehrere Wärmetauscher (13, 18) aufweist, denen jeweils ein Tropfenabscheider (16, 21) nachgeordnet ist.

13. Anlage nach Anspruch 11 oder 12, dadurch gekennzeichnet, daß der oder ein Wärmetauscher (18) Teil einer Kältemaschine (23) ist.

14. Anlage nach Anspruch 12 oder 13, dadurch gekennzeichnet, daß sie einen weiteren, von einem Kühlmittel durchflossenen Wärmetauscher (13) aufweist.

15. Anlage nach einem der Ansprüche 11 bis 14, dadurch gekennzeichnet, daß der Diffusionsfilter (27) als Kerzenfilter ausgebildet ist.

16. Anlage nach einem der Ansprüche 11 bis 15, dadurch gekennzeichnet, daß die Phasentrennvorrichtung ein Koaleszenzabscheider (31) ist.

17. Anlage nach einem der Ansprüche 11 bis 16, dadurch gekennzeichnet, daß stromauf des ersten Wärmetauschers (13) ein Demister oder Koaleszter/Demister (10) angeordnet ist.
